Europäisches Patentamt

European Patent Office

Office européen des brevets

(19)

(11) Publication number: **0 019 336**
**B1**

(12) **EUROPEAN PATENT SPECIFICATION**

(45) Date of publication of patent specification: **14.12.83**

(51) Int. Cl.³: **B 65 D 21/02, B 65 D 1/22**

(21) Application number: **80200430.9**

(22) Date of filing: **08.05.80**

(54) **Plastics crate or tray comprising injection moulding points, method and mould for manufacturing such a crate or tray.**

(30) Priority: **11.05.79 NL 7903735**

(43) Date of publication of application:
**26.11.80 Bulletin 80/24**

(45) Publication of the grant of the patent:
**14.12.83 Bulletin 83/50**

(84) Designated Contracting States:
**AT BE CH DE FR GB IT LI LU NL SE**

(56) References cited:
**CH - A - 572 418**
**DE - A - 2 813 364**
**FR - A - 2 177 008**
**NL - A - 7 508 126**

(73) Proprietor: **WAVIN B.V.**
**Händellaan 251**
**NL-8031 EM Zwolle (NL)**

(72) Inventor: **Ettema, Ernst**
**9 Elzenlaan**
**NL-7771 DJ Hardenberg (NL)**
Inventor: **Benraad, Coenraad J.B.M.**
**19 Rheezerend**
**NL-7701 BC Dedemsvaart (NL)**
Inventor: **Roskam, Klaas**
**19 Rheezerweg**
**NL-7771 WH Hardenberg (NL)**

(74) Representative: **van der Veken, Johannes Adriaan et al,**
**EXTERPATENT Willem Witsenplein 4**
**NL-2596 BK 's-Gravenhage (NL)**

Courier Press, Leamington Spa, England.

Plastics crate or tray comprising injection moulding points,
method and mould for manufacturing such a crate or tray

The invention relates to a plastics crate or tray comprising a bottom and side walls, at least one of the said side walls having at least a double walled section, the bottom of said plastics crate or tray comprising one or more injection moulding points.

A plastics crate or tray of this type is known from CH—A—572.418. Crates or trays of this type comprising hollow corner columns and/or hollow double walled side walls are now used at a large scale as these plastics crates and/or trays may be manufactured by using less plastics material, and nevertheless, still meeting the prescribed loading requirements.

In injection-moulding said plastics crates or trays comprising hollow corner columns and/or hollow side walls, problems arise due to the flow of injection-moulded material into the hollows or openings of the relative mould for forming such crates or trays.

These problems particularly involve unequal wall thicknesses in the corner columns or in the side walls, due to shifted cores, which may lead to an accelerated wear or cleavage of the respective moulds, furthermore flowlines will occur in the plastics crate or tray as formed, which will disadvantageously impair the strength properties of the crate or tray.

Actually, these plastics crates or trays are manufactured by injection-moulding plastics into the bottom part of the mould. Dependent on the type of plastics, the type of injection moulding apparatus and the mould and the preference of the technical expert one large central injection channel in the bottom of the mould is used, or many injection channels divided across the bottom.

When using a central injection channel, the injected material flows through the bottom mould space which will form the bottom of the plastics crate or tray towards the side wall spaces which will form the side walls of the crate or tray, and subsequently said plastics material arrives in the space forming the upstanding side walls, thereby filling the space for the relative inner wall prior to the space for the relative outer wall of said side wall. In the case of a high core between the mould space for forming the inner wall and the outer wall of the crate, this core will shift outwardly involving all the disadvantages mentioned hereinbefore.

If more injection channels divided across the bottom are used the bottom space of the mould will be filled simultaneously with the filling of the inner side wall mould spaces, and thus the cores are still pressed outwardly.

In actual practice, this method of filling the mould through many injection channels in the mould bottom spaces has been chosen as the bottom forms the most loaded part of a crate or tray, so that said bottom should not show any flowline or welding lines and if this is the case, said flowlines or welding lines should be removed in a very early stage, thus avoiding any weak spot in the bottom of the crate.

It has been tried to avoid shifting of the cores during the formation of the inner and outer wall of a double walled side wall by supporting the core by core supports in the mould space but this will result in openings in the outer wall of the crate. It goes without saying that said openings are rather unattractive, with respect to the strength properties of the crates, whilst moreover the core supports may also easily damage the mould during use.

The present invention now aims to provide a plastics crate or tray of the aforementioned type, which plastics crate or tray will not show unequal wall thicknesses or any undesired flowline in the side walls.

This object is attained in accordance with the present invention in that each of said side walls having at least a double walled section comprises at least one injection moulding point, such that during the injection moulding process a second injected plastics mass was able to flow along the outerside of the core bounding the innermost and outermost side wall part of said double walled section at the same time as a first plastics mass was flowed along the inner side of the core(s).

During the injection moulding process, the cores of the hollow side wall or corner column are now subjected to the force of the second plastics mass flowing into the outer space of the mould forming the outer wall and simultaneously to the force of the first plastics mass flowing into the inner space of the mould forming the outer wall and simultaneously to the force of the first plastics mass flowing into the inner space of the mould forming the inner wall of the side wall, so that shifting of the cores is impossible.

Said injection moulding points are preferably located in the outerwall part and said side wall and it will be obvious that when strong upper edges are desired between the spaces forming the inner and outer wall parts of a side wall, the plastics still has the opportunity to flow over the upper edge of the cores from the outerside towards the innerside of the cores.

In the case of injection moulding points in the outer wall of a plastics crate or tray, the high cores bounding the spaces, forming the inner wall and outer wall of a vertical side wall of a crate or tray, the injected second plastics mass will flow around the cores from the outside towards the inside simultaneously with the flow of first plastics mass flowing from the bottom space of the mould into the space forming the inner wall of the side wall. Obviously now said cores are subjected to displacements or deflections, so that the wall thickness of the inner and outer wall will be equal all over the crate or tray, whilst the respective moulds will only be loaded minimally, so than an optimum lifetime can be obtained.

Advantageously the injection moulding points are located at distance from partitions disposed between the inner and outer wall parts of side walls.

If the injection-moulding takes place at the location where said partitions have to be formed, the core bounding the various spaces may not remain stationary, so that the disadvantages as mentioned hereinbefore may occur.

The moulding points are conveniently located upon the front sides of the outer wall part of the side walls and preferably on the lower side of the outer side wall parts.

In a very advantageous embodiment of the present invention the moulding points are located in an upper edge connecting the inner and outer wall parts of a side wall.

This provides a very homogeneous flow of the plastics mass such plastics masses as injected into the mould will evenly flow along the long cores forming the inner wall and the outer wall of a plastics crate or tray.

Moulding points at the locations as mentioned before are not obvious, as moulding experts assumed hitherto that the plastics mass should never be injected at the beginning of an outer wall part, and parallel to that wall, as plastics mass would then directly flow into said outer mould space and would give rise to many irregularities in the wall parts to be moulded. Said irregular division of the plastics would give rise to a notable decrease in the properties of strength.

Surprisingly it has appeared that said objection does not hold, as in accordance with the invention, plastics crates or trays, having optimum properties of strength, may be obtained, provided that plastics masses flow simultaneously around the core parts which bound the space for moulding an inner wall part and an outer wall part of a side wall, at their outer side and their inner side.

Appropriately the moulding points are substantially located at the top of the outer side wall part.

The injection moulding points are preferably located in the lower side of the outer side wall part, which provides a plastics crate or tray presenting very good strength properties, as now on the one hand the mould space which will form the inner wall part is filled from the bottom mould space, whilst on the other hand simultaneously a plastics mass supplied from the lower sides of the outer wall parts will flow along the cores, which bound the space for moulding the outer side wall part. In this case the side cores bounding the side wall parts preferably rest against the main inner mould core by means of core supports which results in the inner wall part of the vertical side wall of the plastics crate or tray being provided with openings at the location where said support took place.

Preferably the inner side wall part do not exhibit any moulding points, as it has appeared that the presence of moulding points at the aforementioned locations might cause the core parts, bounding the inner and outer wall parts of the vertical wall, to be pressed outwardly thus that the outer wall would be weakened and the relative mould would be damaged.

If a moulding point is located upon an inner-wall part of a side wall, this implies that there are substantial connections between the innermost and outermost side wall parts, in order to ensure a sufficient flowing of a plastics mass at the outer side and the inner side of the cores.

The present invention also comprises a method of manufacturing a plastics crate or tray comprising a bottom and side walls at least one of said side walls having at least a double-walled section, the bottom of said crate or tray comprising one or more injection moulding points corresponding with the moulding openings corresponding with bottom injection channel opening in injection-moulding mould space wherein a crate or tray is moulded, by injection of a plastics material into the injection moulding mould space comprising side cores bounding an inner side wall moulding space and an outer side wall moulding for forming the inner and outer wall parts of the side wall wherein a plastics mass is flowed along the inner side of the core bounding the inner side wall moulding space and the outer side wall moulding space, characterized in that a second plastics mass is flowed along the outer side of the core(s) bounding the innermost and outermost side wall parts of said double-walled section at the same time as a first mass is flowed along the innerside of the core(s).

The second plastics masses are preferably injected into the lower edge and/or the upper edge of the outer wall of the doublewalled crate or tray.

The present invention also comprises a mould for injection moulding plastics crates or trays, said mould at least being provided with side cores for forming inner and outer side wall moulding spaces for moulding at least one side wall having a doublewalled section, the mould comprising at least one plastics injection channel, which opens into a bottom forming mould space, which is characterized in that at least one other plastics injection channel adjoins the mould space such that a second plastics mass is able to flow along the side core, bounding the innermost and outermost side wall parts of said double walled section along the outer side of the core(s) when a first plastics mass flows along the inner side of the core(s).

The invention will now be explained with respect to an embodiment in the drawing, wherein

Fig. 1 is a perspective view of a plastics crate or tray according to the present invention;

Fig. 2 is a view of a part of a vertical side wall of a crate or tray and several moulding points, shown on an enlarged scale and the outer wall partially broken away;

Fig. 2a is a view of the crate or tray as seen from the bottom side;

Fig. 3 is part of a mould for forming a crate or tray comprising plastics inlet channels which debouch into an outer side wall moulding space for forming the outer wall of the crate;

Fig. 4 is part of a mould for a plastics crate or tray, corresponding to Fig. 3, injection channels opening into the upper edge moulding space, which upper edge interconnects the vertical side wall parts; and

Fig. 4a is a detail of Fig. 4.

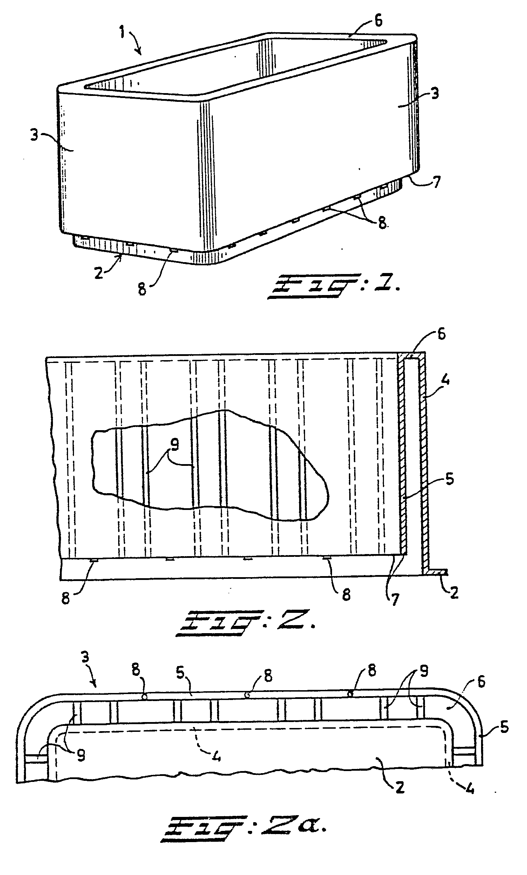

Fig. 1 shows a plastics crate or tray 1, comprising a bottom 2 and vertical side walls, 3, facing each other. The vertical side walls 3 are doublewalled and comprise each an inner side wall part 4 and an outer side wall part 5.

The inner side wall parts 4 are integral with the bottom 2, while said inner side wall parts 4 and the most side wall parts 5 are integrally interconnected at their upper side by an upper edge 6 of the crate or tray. Said connection is, however, not essential.

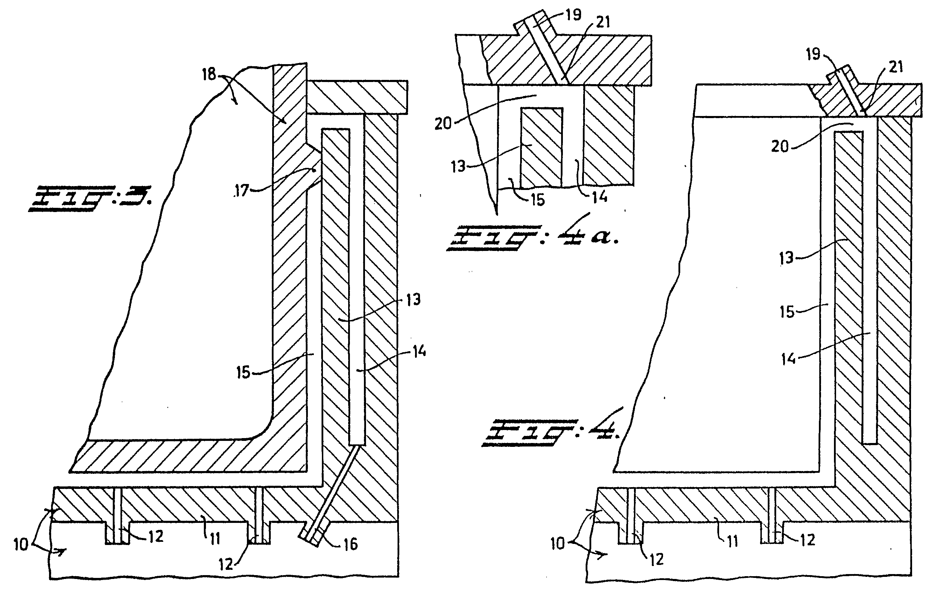

In Fig. 2, the lower edge 7 of the outer side wall part 5 comprises injection moulding points 8, said injection moulding points 8 upon a plastics crate or tray according to the invention are clearly recognizable. The moulding points 8 are preferably located at distance from partition wall reinforcing ribs 9, which connect the inner side wall parts 4 with the outer side wall parts 5. If the moulding points 8 would be located upon said reinforcing ribs 9, the quality of the crates or trays might be impaired.

Manufacturing a crate or tray of this type was assumed by injection moulding experts to be impossible, due to the fact that the presence of such moulding points would cause the injection-moulded mass to be injected directly into the space of a mould for shaping the outer wall part 5. According to the present opinion this would give rise to the formation of inferior flow lines or welding lines and undesired inhomogeneities in the walls. The crate or tray according to the present invention does not exhibit the aforementioned disadvantages, actually a wall having improved strength properties is obtained.

Very good plastics crates or trays are also obtained when the injection moulding points 8 are located in the upper edge 6 of said crate or tray, said edge interconnecting the innermost side wall parts 4 with the outermost side wall parts 5 of a vertical side wall of a crate or tray.

In that case the moulding points in the upper edges should also be accommodated preferably at distance from the reinforcing ribs 9 and, moreover, at distance from the extension of the innermost side wall parts 4.

When the injection moulding points 8 are located above the innermost sidewall parts 5, the disadvantageous properties as mentioned hereinbefore might be obtained, to wit an uneven wall thickness of the innermost wall parts 4 and the outermost wall parts 5, because the cores within a mould for the innermost and outermost side wall parts 4 and 5 may be pressed outwardly.

Fig. 3 shows part of a mould 10, for moulding a plastics crate or tray in accordance with the present invention. For the sake of simplicity the partitioning for the plastics crate or tray is not shown in this figure.

The mould 10 comprises a mould bottom space 11 with an injection supply channel 12, which supply channel 12 debouches into the mould bottom space at distance from the mould spaces 14, 15 which will form the inner wall 4 and the outer wall 5 of a plastics crate or tray. An outer side wall moulding space 14 and an inner side wall moulding space 15 for moulding the innermost side wall parts 4 and the outermost side wall parts 5 are located at either side of the longitudinal side wall cores 13.

The mould 10 comprises another injection channel 16 for plastics debouching into the space 14 for moulding the outermost side wall part 5.

An inward displacement of the high longitudinal cores 13 is avoided by supporting the upper inner sides of said cores, by supporting pins 17, which are supported by the inner core 18 of the mould for forming a plastics crate or tray in accordance with the present invention.

Fig. 3 shows that the channels 16 debouch at distance from the spaces wherein the reinforcing ribs 9 interconnecting the innermost and outermost side wall parts 4 and 5, are moulded.

Fig. 4 shows still another embodiment in which the upper side of the mould now comprises another injection channel 19 debouching into the upper edge moulding space 20 for moulding the upper edge 6 of the crate or tray.

As can be seen in Fig. 4a, the openings 21 of the channels 19 are positioned at distance from the space 15, which will form the innermost side wall part 4.

Said moulding channels 19 are, in a very advantageous manner slopingly positioned so that the plastics mass hits the outer wall of mould space 14.

**Claims**

1. Plastics crate or tray comprising a bottom (2) and side walls (3), at least one of the said side walls (3) having at least a double walled section, the bottom of said plastics crate or tray comprising one or more injection moulding points (8), characterized in that each of said side walls (3) having at least a double walled section comprises at least one injection moulding point (8), such that during the injection moulding process a second injected plastics mass was able to flow along the outside of the core (13) bounding the innermost and outermost side wall part (4, 5) of said double walled section at the same time as a first plastics mass was flowed along the inner side of the core(s) (13).

2. Plastics crate or tray according to claim 1, characterized in that the injection moulding points (8) are located in the outer wall part (5) of said side wall (3), preferably on the lower side of the outer wall part (5).

3. Plastics crate or tray according to claim 1, characterized in that, said injection moulding points (8) are located at distance from partitions (9) disposed between the inner and outer wall parts (4, 5) of side walls (3).

4. Plastics crate or tray according to one or more of the preceding claims, characterized in that, said injection moulding points (8) are located in an upper edge (6) connecting the inner and outer wall parts (4, 5) of said side wall.

5. Plastics crate or tray according to one or more of the preceding claims, characterized in that, the inner wall parts (4) and the axial extension of said inner wall parts (4) are substantially free from injection moulding points (8).

6. Method of manufacturing a plastics crate or tray comprising a bottom (2) and side walls (3) at least one of said side walls having at least a double walled section, the bottom (2) of said crate or tray comprising one or more injection moulding points corresponding with the moulding openings corresponding with bottom injection channel (12) opening in injection-moulding mould space wherein a crate or tray is moulded, by injection of a plastics material into the injection moulding mould space comprising side cores (13) bounding an inner side wall moulding space (15) and an outer side wall moulding (14) for forming the inner and outer wall parts (4, 5) of side wall (3) wherein a plastics mass is flowed along the inner side of the core (13) bounding the inner side wall moulding space (15) and the outer side wall moulding space (14), characterized in that a second plastics mass is flowed along the outer side of the core(s) (13) bounding the innermost and outermost side wall parts (7, 4, 15) of said double-walled section at the same time as a first mass is flowed along the innerside of the core(s) (13).

7. Method according to claim 6, characterized in that, said a second plastics mass is injected into an outer side wall mould space (14) forming an outer wall part (5) of a side wall (3) of a plastics crate or tray (1), preferably into the bottom side of the outer side wall moulding space (14).

8. Method according to claim 6 or 7, characterized in that, said a second plastics mass is injected at distance from a partition (9) forming moulding space.

9. Method according to claim 6, 7 or 8, characterized in that, said a second plastics mass is injected into an edge forming moulding space (20) forming an upper edge (6) connecting the inner and outer wall parts (4, 5) of a side wall.

10. Mould for injection moulding plastics crates or trays, said mould at least being provided with side cores (13), for forming inner (15) and outer (14) side wall moulding spaces for moulding at least one side wall having a double-walled section, the mould comprising at least one plastics injection channel (12), which opens into a bottom forming mould space, characterized in that, at least one other plastics injection channel (16, 19) adjoins the mould space such that a second plastics mass is able to flow along the side core (3) bounding the innermost and outermost side wall parts (4, 5) of said double walled section along the outer side of the core(s) (13) when a first plastics mass flows along the inner side of the core(s) (13).

11. Mould according to claim 10, characterized in that, the other plastic injection channel (16, 19) debouches into the outer side wall moulding space (14) of the crate or tray, preferably into the bottom side of the outer side wall moulding space (14).

12. Mould according to claim 10 or 11, characterized in that, said other plastics injection channel (16, 19) debouches at distance from a partition (9) forming moulding space.

13. Mould according to claim 10, 11 or 12, characterized in that, said other plastics injection channel (19) debouches into an upper edge moulding space (20) for forming an upper edge (6) for connecting the inner and outer wall parts (4, 5) of said side wall (3).

## Patentansprüche

1. Kunststoffkasten oder -steige, bestehend aus einem Boden (2) und Seitenwänden (3), von denen zumindest eine zumindest einen doppelwandigen Bereich aufweist, wobei der Boden des Kunststoffkastens bzw. der -steige eine oder mehrere Angußstellen (8) aufweist, dadurch gekennzeichnet, daß jede der Seitenwände (3) mit zumindest einem doppelwandigen Bereich zumindest eine Angußstelle (8) aufweist, derart, daß während des Spritzgießvorgangs eine zweite eingespritzte Kunststoffmasse an der Außenseite des den inneren und den äußeren Seitenwandteil (4, 5) des doppelwandigen Bereiches begrenzenden Kerns (13) zur gleichen Zeit entlangfließen kann, zu der eine erste Kunststoffmasse an der Innenseite des Kerns oder der Kerne (13) entlangströmt.

2. Kunststoffkasten oder -steige nach Anspruch 1, dadurch gekennzeichnet, daß die Angußstellen (8) in dem äußeren Wandteil (5) der Seitenwand (3), und zwar vorzugsweise an der Unterseite des äußeren Wandteils (5), angeordnet sind.

3. Kunststoffkasten oder -steige nach Anspruch 1, dadurch gekennzeichnet, daß die Angußstellen (8) im Abstand von zwischen dem inneren und dem äußeren Wandteil (4, 5) der Seitenwände (3) angeordneten Unterteilungen (9) vorgesehen sind.

4. Kunststoffkasten oder -steige nach einem oder mehreren der vorhergehenden Ansprüche, dadurch gekennzeichnet, daß die Angußstellen (8) in einem oberen Rand (6) angeordnet sind, der den inneren und den äußeren Wandteil (4, 5) der Seitenwand miteinander verbindet.

5. Kunststoffkasten oder -steige nach einem oder mehreren der vorhergehenden Ansprüche, dadurch gekennzeichnet, daß die inneren Wandteile (4) und deren axiale Verlängerung im wesentlichen frei von Angußstellen (8) sind.

6. Verfahren zur Herstellung eines Kunststoffkastens oder einer -steige, bestehend aus einem Boden (2) und Seitenwänden (3), von denen zumindest eine zumindest eine doppelwandigen Bereich aufweist, wobei der Boden (2) des Kunststoffkastens oder der -steige eine oder mehrere Angußstellen aufweist, die den Angußöffnungen entsprechen, die dem Bodenangußkanal (12) entsprechen, der in den Spritzguß-Formraum ausmündet, wobei ein Kasten oder eine Steige durch Einspritzen von Kunststoff in dem Spritzguß-Formraum gebildet wird, der Seitenkerne (13) aufweist, die einen inneren Seitenwand-Formraum (15) und einen äußeren Seitenwand-Formraum (14) zum Bilden der inneren und der äußeren Wandteile (4, 5) der Seitenwand (3) begrenzen, wobei eine Kunststoffmasse an der Innenseite des den inneren Seitenwand-Formraum (15) und den äußeren Seitenwand-Formraum (14) begrenzenden Kerns (13) entlanggeführt wird, dadurch gekennzeichnet, daß eine zweite Kunststoffmasse an der Außenseite des/der die inneren und äußeren Seitenwandteile (7, 4, 15) des doppelwandigen Bereiches begrenzenden Kerns/Kerne (13) zur gleichen Zeit entlanggeleitet wird, zu der eine erste Masse an der Innenseite des Kerns oder der Kerne (13) entlanggeführt wird.

7. Verfahren nach Anspruch 6, dadurch gekennzeichnet, daß die zweite Kunststoffmasse in einen äußeren Seitenwand-Formraum (14) eingespritzt wird, der einen äußeren Wandteil (5) einer Seitenwand (3) eines Kunststoffkastens oder einer Kunststoffsteige (1) bildet, und zwar vorzugsweise in die Bodenseite des äußeren Seitenwand-Formraums (14).

8. Verfahren nach Anspruch 6 oder 7, dadurch gekennzeichnet, daß die zweite Kunststoffmasse im Abstand von einem eine Unterteilung (9) bildenden Formraum eingespritzt wird.

9. Verfahren nach Anspruch 6, 7 oder 8, dadurch gekennzeichnet, daß die zweite Kunststoffmasse in einen einen Rand bildenden Formraum (20) eingespritzt wird, der einen den inneren und den äußeren Wandteil (4, 5) einer Seitenwand miteinander verbindenden oberen Rand (6) bildet.

10. Form zum Spritzgießen von Kunststoffkästen oder -steigen, die zumindest mit Seitenkernen (13) zum Bilden von inneren (15) und äußeren (14) Seitenwand-Formräumen zum Formen von zumindest einer Seitenwand mit einem doppelwandigen Bereich versehen ist, wobei die Form zumindest einen Kunststoffangußkanal (12) aufweist, der in einen einen Boden bildenden Formraum ausmündet, dadurch gekennzeichnet, daß zumindest ein weiterer Kunststoffangußkanal (16, 19) an den Formraum angrenzt, derart, daß eine zweite Kunststoffmasse an dem Seitenkern (13), der den inneren und den äußeren Seitenwandteil (4, 5) des doppelwandigen Bereiches begrenzt, entlang der Außenseite des Kerns oder der Kerne (13) entlangfließen kann, während eine erste Kunststoffmasse an der Innenseite des Kerns oder der Kerne (13) entlangfließt.

11. Form nach Anspruch 10, dadurch gekennzeichnet, daß der weitere Kunststoffangußkanal (16, 19) in den äußeren Seitenwand-Formraum (14) des Kastens oder der Steige, vorzugsweise in die Bodenseite des äußeren Seitenwand-Formraums (14), ausmündet.

12. Form nach Anspruch 10 oder 11, dadurch gekennzeichnet, daß der andere Kunststoffangußkanal (16, 19) im Abstand von einem eine Unterteilung (9) bildenden Formraum ausmündet.

13. Form nach Anspruch 10, 11 oder 12, dadurch gekennzeichnet, daß der weitere Kunststoffangußkanal (19) in einen Oberrand-Formraum (20) zum Bilden eines oberen Randes (6) für das gegenseitige Verbinden des inneren und des äußeren Wandteils (4, 5) der Seitenwand (3) ausmündet.

**Revendications**

1. Cageot ou plateau en matière plastique qui comprend un fond (2) et des parois latérales (3), l'une au moins desdites parois latérales (3) ayant au moins une section à double paroi, le fond dudit cageot ou plateau en matière plastique comprenant un ou plusieurs points de moulage par injection (8), caractérisé en ce que chacune desdites parois latérales (3) ayant au moins une section à double paroi, comprend, au moins un point de moulage par injection (8), de sorte que, durant l'opération de moulage par injection, une seconde masse de matière plastique injectée a pu couler le long de la face extérieure du noyau (13) délimitant les parties de parois latérales intérieures et extérieures (4, 5) de ladite section à double paroi, en même temps qu'une première masse de matière plastique a coulé le long de la face intérieure du ou des noyau(x) (13).

2. Cageot ou plateau en matière plastique selon la revendication 1, caractérisé en ce que les points de moulage par injection (8) sont situés dans la partie de paroi extérieure (5) de ladite paroi latérale (3), de préférence, sur le côté inférieur de la partie de paroi extérieure (5).

3. Cageot ou plateau en matière plastique selon la revendication 1, caractérisé en ce que lesdits points de moulage par injection (8) sont situés à une certain distance de cloisons (9) disposées entre les parties de paroi intérieures et extérieures (4, 5) des parois latérales (3).

4. Cageot ou plateau en matière plastique selon une ou plusieurs des revendications précédentes, caractérisé en ce que lesdits points de moulage par injection (8) sont situés dans un bord supérieur (6) reliant les parties de paroi intérieures et extérieures (4, 5) de ladite paroi latérale.

5. Cageot ou plateau en matière plastique selon une ou plusieurs de revendications précédentes, caractérisé en ce que les parties de paroi intérieures (4) et le prolongement axial desdites parties de paroi intérieures (4) ne comportant pratiquement pas de points de moulage par injection (8).

6. Procédé pour fabriquer un cageot ou un plateau en matière plastique comprenant un fond (2) et des parois latérales (3), l'une au moins desdites parois latérales ayant au moins une section à double paroi, le fond (2) dudit cageot ou plateau comprenant un ou plusieurs points de moulage par injection correspondant aux ouvertures de moulage qui correspond avec le canal inférieur de moulage par injection (12) débouchant dans le volume intérieur du moule de moulage par injection, dans lequel un cageot ou un plateau est moulé, par injection d'une matière plastique dans le volume intérieur du moule de moulage par injection comprenant des noyaux latéraux (13) délimitant un espace de moulage (15) de la paroi latérale intérieure et un espace de moulage de la paroi latérale extérieure (14), pour former les parties de paroi intérieure et extérieure (4, 5) de la paroi latérale (3), dans lequel une masse de matière plastique est coulée le long de la face intérieure du noyau (13) délimitant l'espace de moulage (15) de la paroi latérale intérieure et l'espace de moulage (14) de la paroi latérale extérieure, caractérisé en ce qu'une seconde masse de matière plastique est coulée le long de la face extérieure du ou des noyau(x) (13) délimitant les parties de paroi latérale intérieure et extérieure (7, 4, 15) de ladite section à double paroi, en même temps qu'une première masse est coulée le long de la face intérieure du ou des noyau(x) (13).

7. Procédé selon la revendication 6, caractérisé en ce qu'une seconde masse de matière plastique est injectée dans un espace de moulage (14) de la paroi latérale extérieure afin de former une partie de paroi extérieure (5) d'une paroi latérale (3) d'un cageot ou plateau en matière plastique (1), de préférence, dans la partie de fond de l'espace de moulage (14) de la paroi latérale extérieure.

8. Procédé selon la revendication 6 ou 7, caractérisé en ce qu'une seconde masse de matière plastique est injectée à une certaine distance d'une cloison (9) formant l'espace de moulage.

9. Procédé selon l'une quelconque des revendications 6, 9 ou 8, caractérisé en ce qu'une seconde masse de matière plastique est injectée dans un bord délimitant un espace de moulage (20), en formant un bord supérieur (6) qui relie les parties de paroi intérieure et extérieure (4, 5) d'une paroi latérale.

10. Moule pour mouler par injection des cageots ou des plateaux en matière plastique, ledit moule au moins étant pourvu de noyaux latéraux (13) pour former des espaces de moulage de parois latérales intérieure (15) et extérieure (14) en vue de mouler au moins une paroi latérale ayant une section à double paroi, le moule comprenant au moins un canal d'injection de matière plastique (12) qui débouche dans un espace de moulage formant un fond, caractérisé en ce qu'au moins un second canal d'injection de matière plastique (16, 19) est contigu à l'espace de moulage, de sorte qu'une seconde masse de matière plastique peut s'écouler le long du noyau latéral (3) délimitant les parties de paroi latérale intérieure et extérieure (4, 5) de ladite section à double paroi le long de la face extérieure du ou des noyau(x) (13) quand une première masse de matière plastique s'écoule le long de la force intérieure du ou des noyau(x) (13).

11. Moule selon la revendication 10, caractérisé en ce que le second canal d'injection de matière plastique (16, 19) débouche dans l'espace de moulage (14) de la paroi latérale extérieure du cageot ou du plateau, de préférence, dans la partie de fond de l'espace de moulage (14) de la paroi latérale extérieure.

12. Moule selon la revendication 10 ou 11, caractérisé en ce que ledit second canal d'injection de matière plastique (16, 19) débouche à une certaine distance d'un cloison (9) formant l'espace de moulage.

13. Moule selon l'une quelconque des revendications 10, 11 ou 12, caractérisé en ce que ledit second canal d'injection de matière plastique (19) débouche dans un espace de moulage de bord supérieur (20) appelé à former un bord supérieur (6) destiné à relier les parties de paroi intérieure et extérieure (4, 5) de ladite paroi latérale (3).

**0 019 336**

Fig. 1.

Fig. 2.

Fig. 2a.

Fig. 4.

Fig. 4a.

Fig. 3.